# EUROPEAN PATENT APPLICATION

(11) **EP 2 927 744 A1**
(43) Date of publication of application: **07.10.2015**
(21) Application number: 15160781.9
(22) Date of filing: 25.03.2015
(51) Int. Cl.: G03B 15/00, G01C 11/02, B64D 47/08

(54) **Stabilization of gyro drift compensation for image capture device**

(30) Priority: 31.03.2014 US 201414230331
(71) Applicant: Goodrich Corporation, Charlotte, North Carolina 28217-4578 (US)
(72) Inventor: Flynn, Monique, Lexington, MA 02421 (US); Humphrey, Ian Peter, Foxboro, MA 02035 (US)
(74) Representative: Leckey, David Herbert

(57) **Abstract**

An image capture system comprises an image capture device (24) driven by a motor to a desired angle. A gyro (30) senses a rate and a system senses an angle of the image capture device (24) relative to a surface. A control removes a gyro bias error estimated by the system in real time for correcting a position of the image capture device (24).

## Description

### BACKGROUND OF THE INVENTION

This application relates to a method of determining a gyro drift compensation factor in real time.

Image capture technology is becoming more and more sophisticated. As known, an image capture device, such as a camera, may be mounted to an aircraft utilized as a surveillance or data gathering vehicle. Thus, the aircraft passes over an area of interest and the image capture device captures images.

As known, the image capture device is typically mounted on a gimbal. The gimbal is driven to a desired angular location such that it will capture the area of interest on the ground. Then, an image is captured.

Gyros are included within the gimbal and can provide information with regard to movement of the image capture device from a desired location due to various factors. As an example, turbulence in the air affecting the aircraft will also affect the orientation stability of the image capture device. The gyro will provide an angular rate change quantity to a control and the control can then utilize this quantity to properly position the image capture device. It is also known that every gyro has some "bias" or error factor that corrupts the true rate measurement.

Thus, while a control may desire that the image capture device be at a particular angle, the actual "drift" from a desired angle may be caused by the gyro providing the feedback due to the bias error in the gyro.

It is known to provide a second mechanism associated with the gimbal to gather information with regard to this bias. As an example, an independent inertial measurement system attitude solution may be provided, and can determine the actual angle with regard to the ground.

It is known to use the independent inertial measurement attitude solution to observe the feedback gyro bias error and provide a bias estimate.

In the known method, the gimbal is rate-stabilized using the feedback gyros. During this stabilization mode, the gyro feedback is corrected by the estimated bias from a previous image capture event. In stabilization mode, the drift of the gyro may be compensated for, to more accurately correct for conditions, such as turbulence or other aircraft movement. In the prior method, at this time, the determined bias from the previous reading is utilized to perform rate-stabilization.

The bias error may change over time and, thus, this method has not always proven as accurate as may be desirable.

### SUMMARY OF THE INVENTION

An image capture system comprises an image capture device driven by a motor to a desired angle. A gyro senses a rate and a system senses an angle of the image capture device relative to a surface. A control removes a gyro bias error estimated by the system in real time for correcting a position of the image capture device. A method is also disclosed.

These and other features may be best understood from the following drawings and specification.

### BRIEF DESCRIPTION OF THE DRAWINGS

Figure 1 schematically shows an aircraft.
Figure 2A shows a first step in positioning an image capture device.
Figure 2B schematically shows what is occurring in Figure 2A.
Figure 3A shows a second step in positioning the image capture device.
Figure 3B schematically shows the actions taken during step 3A.
Figure 4A shows a subsequent step.
Figure 4B schematically shows the Figure 4A control.
Figure 5A shows a subsequent step.
Figure 5B schematically shows the detail of the Figure 5A movement.
Figure 6A shows another step.
Figure 6B schematically shows the Figure 6A step.
Figure 7A shows a prior correction.
Figure 7B shows the current correction.
Figure 8 is a flowchart for the disclosed method.

### DETAILED DESCRIPTION

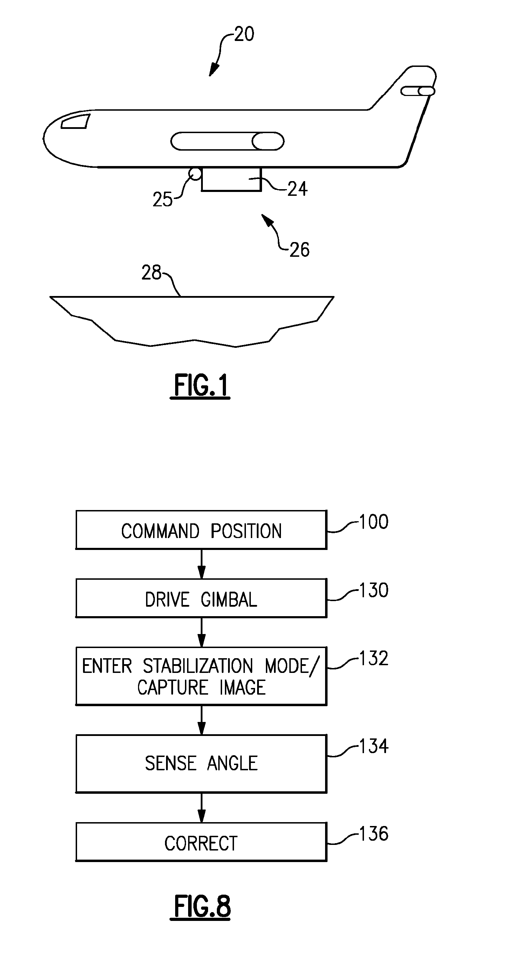

An aircraft 20 is schematically illustrated in Figure 1 having an image capture device 24 with a gimbal drive 25 shown schematically. The combination is shown as 26. The image capture device 24, which may be a known camera type, is intended to capture images of an area 28 on the ground. As can be appreciated, the aircraft 20 may be experiencing turbulence or other movement while an image is being captured.

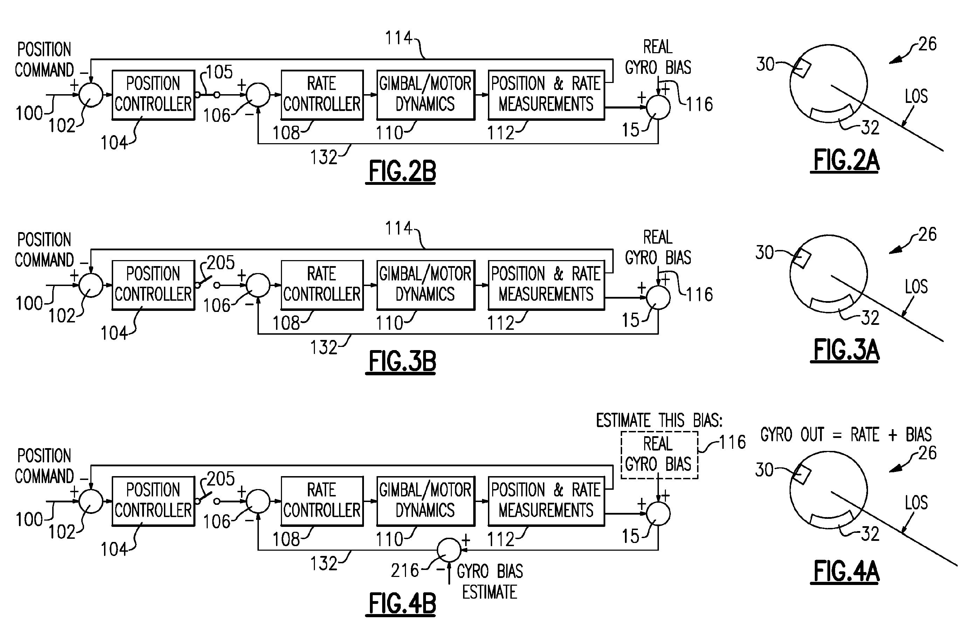

Figure 2A shows a first step wherein a line of sight (LOS) is desired with regard to the image capture device and gimbal combination 26. An inertial navigation system 32 can determine an actual angle with regard to the area 28 on the surface. An acceptable navigation system may include gyros and accelerometers. In addition, a gyro 30 senses the inertial angular rate of the gimbal.

As shown in Figure 2B, a position command 100 drives the gimbal 25 to the line of sight as shown in Figure 2A. A summer block 102 receives the signal along with a feedback signal. The position controller 104 then may drive a signal through a switch 105 (shown closed here) to a summation block 106 and a rate controller 108. The gimbal/motor dynamics 110 receive the signal and drive the gimbal 25 to position the image capture device 24 as desired. Position and rate measurements are captured at 112. This is provided as feedback back to the block 102. Then, a summation block 15 receives a gyro bias error 116 added to the true rate to accurately represent the gyro 30. A feedback signal 132 returns back to the block 106.

As shown in Figure 3A, a stabilization step begins. It is during this stabilization step that the image will be captured.

The image collection occurs with the position loop open, where control is only under gyro feedback. The gyro feedback is corrupted by a bias error. To keep the image capture device at the desired angle relative to a surface, an independent inertial navigation system is used to estimate the rate feedback gyro bias. The bias error is removed in real-time during the image capture, as described below.

As shown in Figure 3B, the switch is now moved to an open position 205. The position command 100, and position controller 104 no longer communicate with the gimbal/motor dynamics. Instead, the gyro bias error 116 is summed at block 15 with the true rate measurement to depict the actual rate measurement, and communicates with the block 106, such that the position of the gimbal is adjusted for the line of sight to be rate stabilized.

Figure 4A shows a subsequent step. At this point, the gyro bias error is estimated via the independent inertial measurement system 32. That gyro bias estimate is removed during the image capture via block 216, and communicates back to block 106. Thus, the actual position of the gimbal 26 is adjusted at this point to correct for this bias. This adjustment continues on a real time basis.

During this real time feedback, the image is captured. Thus, the actual LOS of the image capture device is maintained precise to that which is desired.

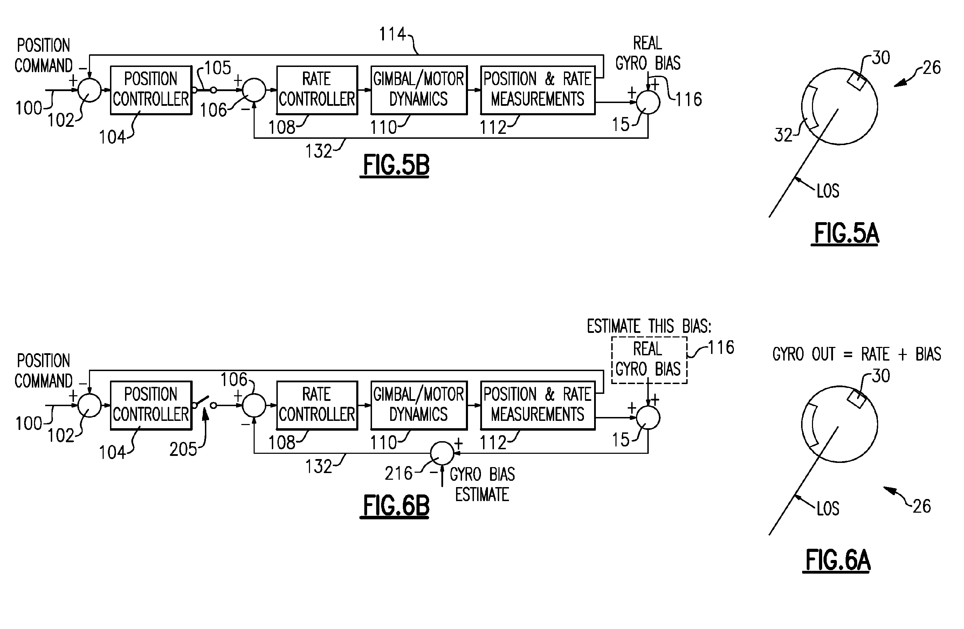

Figure 5A shows the movement of the gimbal 25 to a subsequent line of sight. Figure 5B shows the initial movement, which is similar to Figure 2B.

A position command 100 drives the gimbal 25 to the new line of sight. A summer block 102 receives the signal along with a feedback signal. The position controller 104 then may drive a signal through a switch 105 (shown closed here) to a summation block 106 and a rate controller 108. The gimbal/motor dynamics 110 receive the signal and drive the gimbal 25. Position and rate measurements are captured at 112. This is provided as feedback back to the block 102. Note, summation block 15 receives a gyro bias error adding to the true gyro signal 116. A feedback signal 132 returns back to the block 106.

Once the gimbal is driven to approach the desired position, as shown in Figure 5B, a subsequent stabilization and image capture step is taken. Thus, as shown in Figure 6A, the inertia navigation system 32 again takes a measurement of the line of sight position, while the gyro 30 measures the inertial rate. As shown in Figure 6B, the switch 205 is now open. All that is driving the gimbal 25 at this point is the feedback information. The inertial navigation system estimates the feedback gyro bias error or "drift" of the gyro. This estimate is utilized in a real time manner to further drive the gimbal to a desired position such that an image can be captured with drift minimized.

Figure 6B may actually include the two sub-steps of Figures 3B and 4B. The initial feedback at block 216 may be from the previous stabilization event, such as that determined in Figure 4B. Still, the previous determination will be continuously replaced and updated by new information.

The updates may be on an order of 200 hertz. Thus, the updates are taken much more frequently than one per second.

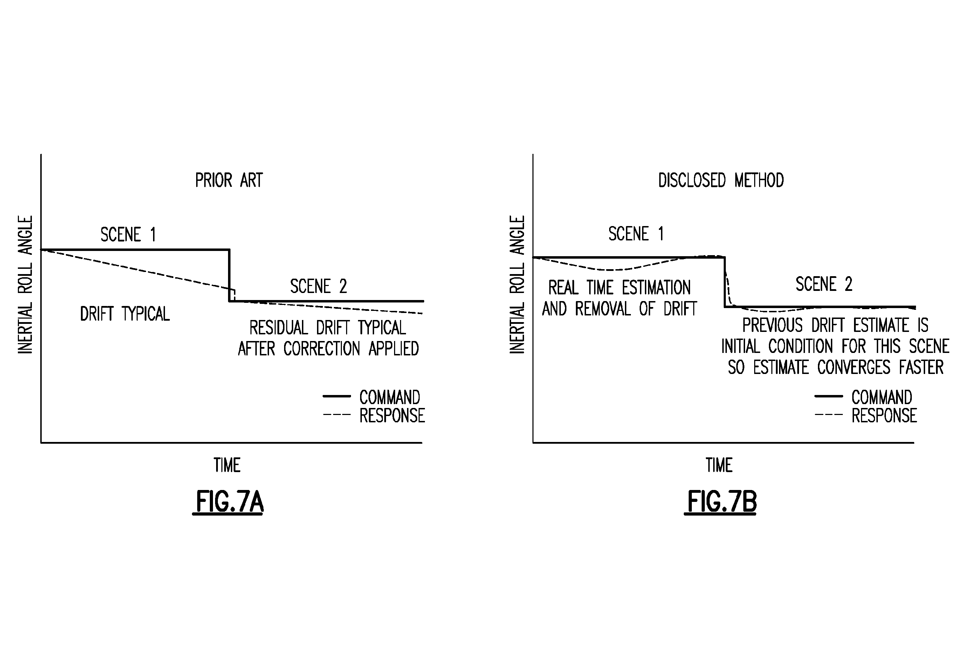

Figure 7A shows a prior art correction. The prior system would utilize the previously determined drift to correct. However, the drift can change, and thus the actual response may have differed by an undesirably large amount from the commanded position.

In contrast, Figure 7B shows the inventive method wherein the response is kept closer to the commanded position in real-time. Again, more accurate image capture will result.

Figure 8 shows a flowchart wherein a command position 100 is determined and the gimbal is driven at 130 to reach the position. As shown at 132, stabilization mode has been entered and an image is captured. While this is ongoing, the gyro drift is determined at 134. Then, at 136, in a real time manner, the gyro bias error is removed so the position of the gimbal does not drift erroneously.

Although an embodiment of this invention has been disclosed, a worker of ordinary skill in this art would recognize that certain modifications would come within the scope of this invention. For that reason, the following claims should be studied to determine the true scope and content of this invention.

## Claims

1. An image capture system comprising:
an image capture device (24) driven by a motor to a desired angle;
a gyro (80) for sensing rate and a system (32) for sensing an angle of said image capture device (24) relative to a surface; and
a control for removing a gyro bias error estimated by the system in real time for correcting a position of said image capture device (24).

2. The image capture system as set forth in claim 1, wherein said correcting the position of the image capture device (24) in real time occurs while an image is being captured.

3. The image capture system as set forth in claim 2, wherein said gyro bias error estimate is estimated and removed to adjust position of the image capture device (24) at a frequency rate greater than once a second.

4. The image capture system as set forth in any preceding claim, wherein said motor drives a gimbal (25).

5. The image capture system as set forth in any preceding claim, wherein said system (32) is an inertial navigation system.

6. The image capture system as set forth in any preceding claim, wherein said control initially adjusting the position of the image capture device (24) utilizing both position feedback, and rate feedback from said gyro, then subsequently stabilizing the image capture device (24), if necessary, by removing the gyro bias error estimate.

7. The image capture system as set forth in any preceding claim, wherein said gyro bias error estimate is determined and is utilized to adjust position of the image capture device (24) at a frequency rate greater than once a second.

8. A method of operating an image capture device (24) comprising:
driving an image capture device (24) to a desired angle;
sensing an actual angle of said image capture device (24) relative to a surface and determining a bias error estimate of a gyro (30); and
utilizing the bias error estimate as a correction factor for correcting a position of said image capture device (24) in real time.

9. The method as set forth in claim 8, wherein the step of utilizing said determined bias error estimate in real time occurs while an image is being captured.

10. The method as set forth in claim 9, wherein said bias error estimate is determined and is utilized to adjust position of the image capture device (24) at a frequency rate of greater than once a second.

11. The method as set forth in any of claims 8 to 10, wherein said image capture device (24) is mounted on a gimbal (25).

12. The method as set forth in any of claims 8 to 11, wherein sensing of the actual angle is performed by an inertial navigation system (32).

13. The method as set forth in any of claims 8 to 12, wherein said bias error estimate is determined and is utilized to adjust position of the image capture device (24) at a frequency rate of greater than once a second.
